# EUROPEAN PATENT APPLICATION

(11) **EP 4 431 536 A1**
(43) Date of publication of application: **18.09.2024**
(21) Application number: 23162705.0
(22) Date of filing: 17.03.2023
(51) Int. Cl.: C08F 220/18, C09J 133/08, C08G 18/00

(54) **AQUEOUS CATIONIC POLYMER EMULSION AND AQUEOUS CATIONIC POLYMER EMULSION PREPARATION METHOD**

(71) Applicant: CHT Turkey Kimya Sanayi ve Ticaret A.S., Istanbul (TR)
(72) Inventor: AKBULUT, Hüseyin, Istanbul (TR); ÇEL KBA , Sena, Istanbul (TR); ENADA, Seher, Istanbul (TR); U AKLI, Müge, Istanbul (TR); GÜRBÜZ, Nazile, Istanbul (TR); ÇILDAN, Serpil, Istanbul (TR)
(74) Representative: Yavuzcan, Alev

(57) **Abstract**

In particular, the invention relates to an aqueous cationic polymer emulsion suitable for use as a hydrophobic coating and polymeric wax emulsifier, which enables the preparation of a hydrophobic emulsion by direct mixing of the polymeric emulsifier without the use of surface-active additives, mechanical homogenization techniques and solvents, and to a method of preparing such emulsion.

## Description

### Technical Field

The invention relates to an aqueous cationic polymer emulsion used as a polymeric emulsifier and to a method of preparing the emulsion.

In particular, the invention relates to an aqueous cationic polymer emulsion suitable for use as a hydrophobic coating and polymeric wax emulsifier, which enables the preparation of a hydrophobic emulsion by direct mixing of the polymeric emulsifier without the use of surface-active additives, mechanical homogenization techniques and solvents, and to a method of preparing such emulsion.

### State of the Art

Waxes are generally organic substances derived from natural and synthetic materials, which are solid at room temperature and turn to liquid when heated. Waxes with hydrophobic properties that basically avoid water and expel water are effective in obtaining polishing, water repulsion, decay prevention, mold release, barrier coating, sliding and lubrication properties on the surface. These waxes are used in a wide range of applications, from everyday necessities such as cosmetics, car wax, candles and crayons, to industrial products such as tires, adhesives, inks and paints. Due to their hydrophobic nature, the preparation of stable aqueous emulsions of waxes is a challenge for many industries. Emulsification (dissolution in liquid) of waxes can be achieved using diluents, surfactants (surface-active additives), mechanical homogenization techniques such as grinding using a roller mill or ball mill, supersonic wave, high shear wheel to achieve consistency in wax particle size and stability.

The incorporation of wax in polymeric formulations is known in the art and is covered in some patents such as US3884857, US5229450, US4942193, US5081174, EP1016684A2, EP0688793A1. These polymer-containing emulsions of hydrophobic waxes are prepared on the basis of the methods of preparation of emulsified mixtures of polymerizable hydrophobic monomers, water-insoluble waxes, emulsifiers and other additives, after which the hydrophobic polymers and waxes obtained during the polymerization process form stable micelles (ion clusters) surrounded by the emulsifier to obtain a wax emulsion. However, these methods have significant limitations in the type and quantity of wax obtained. The wax content should be compatible with the hydrophobic monomer emulsion before polymerization and should be able to form stable micelles after polymerization. In addition, said methods often require significant amounts of surfactants and these surfactant additives reduce the overall performance, yield and quality of the finished coating, particularly its hydrophobicity (water repellency).

Conventional polymer emulsion is prepared with hydrophobic polymers obtained after polymerization and hydrophobic monomers containing emulsifier that stabilizes the first monomer emulsion. In this method, the amount of emulsifier used in polymerization is limited and the physical properties of the coating are destroyed if the emulsifier is used in excess. In other words, micelles (clusters of surface-active/surfactant molecules dispersed in the colloidal solution/solution) in conventional emulsions carrying hydrophobic polymers in water and surrounded by emulsifier have already reached the maximum limit of their hydrophobic polymer carrying capacity. For this reason, this type of conventional emulsion is not suitable as a polymeric emulsifier for hydrophobic waxes. In addition, other emulsifier-free conventional emulsions are based solely on the combination of ionic and hydrophobic monomers. However, in this method, it is very difficult to bind all ionic monomers together with hydrophobic monomers to the parent polymer due to phase separation in the water phase which causes preferential polymerization of ionic monomers and only a small amount of hydrophobic monomers can bind to ionic monomers. The remaining unreactive hydrophobic monomers polymerize among themselves and surround a small fraction of the ionic monomer containing polymers that act as polymeric emulsifiers. In this case, micelles again reach the maximum limit of hydrophobic polymer carrying capacity and emulsification of waxes in these emulsions is not possible. This problem is shown in Graph-1. 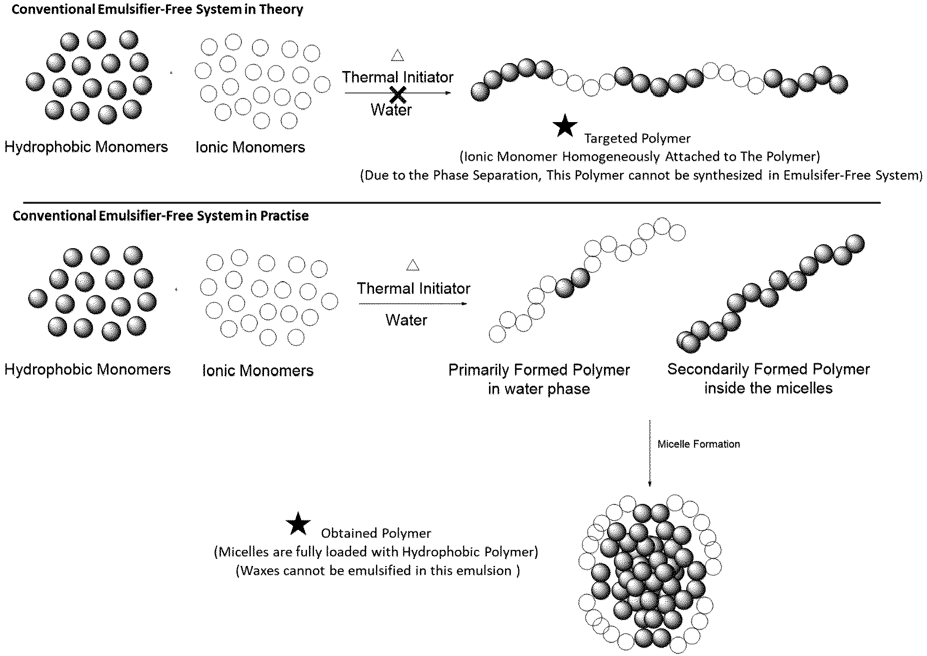 Graph 1: Graphical representation of the process of reaching the maximum limit of hydrophobic polymer carrying capacity of micelles in conventional systems without emulsifiers.

A method of forming an aqueous polymeric dispersion comprising wax is disclosed in a patent document EP0688793A1 in the known state of the art. This method requires the polymerization step of at least one ethylenically unsaturated monomer. Polymerization in the presence of very fine particles of wax results in a stable dispersion with excellent properties. In addition, a multiple surfactant system consisting of non-ionic and/or anionic surfactant and/or alkali metal salts and/or fatty acid esters can be used. In the process described in the document, an emulsion medium containing water, a stabilizing surfactant system, a hydrophobic roller and at least one ethylenically unsaturated monomer is formed and emulsion polymerization of this monomer is carried out. Preferably, the hydrophobic wax is first placed in an aqueous medium, dispersed at a temperature above its melting point and an initiator component such as ammonium persulfate is added. Monomers consisting of styrene and butyl acrylate are added after the initiator and waited for sufficient time. In this process, a multi-stabilizing surfactant system is added to maintain the stability of the latex particles and wax. With this method, aqueous polymeric emulsions containing wax can be formed without problems such as lack of stability, inconsistent particle size, phase separation, particle coagulation, etc. The document does not mention a solution for the preparation of wax emulsion using aqueous polymeric emulsifier by direct mixing without the use of surface-active additives and mechanical homogeneous techniques, nor a solution for the method of preparation of this solution.

Another patent document JPH05117310A of the known art discloses a method of preparing an emulsifier-free polymer dispersion comprising polymerization of ethylenically unsaturated monomers in an aqueous medium using a polymerization initiator. The document also discusses the use of polymer dispersions produced by this method as coatings. The document mentions the conversion of ethylenically unsaturated monomers to the target polymer in an aqueous medium using a polymerization initiator such as 0.1-5 wt% water-soluble hydrogen peroxide, sodium peroxodisulfate or ammonium peroxodisulfate. Furthermore, conventional regulators such as n-dodecyl mercaptan, t-dodecyl mercaptan, thioglycol and thioglycine can be used to adjust the molecular weight. This polymer dispersion can also be used as a paper lacquer and for this purpose, film forming auxiliaries such as propylene glycol and butyl glycol, softeners such as din-butyl phthalate, surface tension regulators such as isopropanol and waxes can be added at a rate of 1-10%. The document does not mention a solution for the preparation of wax emulsion using aqueous polymeric emulsifier by direct mixing without the use of surface-active additives and mechanical homogeneous techniques, nor a solution for the method of preparation of this solution.

As a result, there is a need to develop an aqueous cationic polymer emulsion for use as polymeric wax emulsifiers by working with direct hydrophobic wax incorporation and for use as hydrophobic coating and also an aqueous cationic polymer emulsion preparation method that enables the preparation of wax emulsion using direct mixing of aqueous polymeric emulsifier without using surface-active additives suitable and mechanical homogenization techniques and solvent-based production methods, and an aqueous cationic polymer emulsion preparation method that enables the synthesis of acrylic-based aqueous cationic polymer emulsion by emulsion polymerization.

### Purpose of the Invention

The present invention relates to an aqueous cationic polymer emulsion and a method of preparing the aqueous cationic polymer emulsion, which fulfills the above-mentioned requirements, eliminates possible disadvantages and provides some additional advantages.

The main purpose of the inventive aqueous cationic polymer emulsion and aqueous cationic polymer emulsion preparation method is to obtain an aqueous cationic polymer emulsion and preparation method suitable for use as a hydrophobic coating and polymeric wax emulsifier, which enables the preparation of wax emulsion by direct mixing of aqueous polymeric emulsifier without the use of surface-active additives, mechanical homogenization techniques and solvent.

Another object of the invention is to provide an aqueous cationic polymer emulsion and a method of preparation thereof, enabling the use of the obtained cationic emulsifier-free polymeric emulsion as a polymer wax emulsifier having a polymeric structure that ensures homogeneous distribution of the entire ionic content on the main polymer chain by selecting the ionic monomers, the hydrophobic type and the ideal ratio.

Another object of the invention is to provide an aqueous cationic polymer emulsion and a method of preparation thereof, which enables the emulsification of various hydrophobic waxes and the control of the particle size by varying the ratio of the polymeric emulsifier, independently of the viscosity values and the proportions of the final polymer emulsion in the emulsion.

Another object of the invention is to provide an aqueous cationic polymer emulsion and a method of preparation thereof, enabling to obtain a polymeric emulsifier compatible with reactive waxes such as urethane-based synthetic waxes and high temperature sensitive alkyl ketene dimers (AKD).

Another object of the invention is to provide an aqueous cationic polymer emulsion and preparation method for synthesizing an acrylic-based aqueous cationic polymer emulsion by emulsion polymerization.

Another object of the invention is to provide an aqueous cationic polymer emulsion and preparation method for improving the performance, efficiency and quality of the hydrophobic coating, in particular its hydrophobic properties.

In order to achieve the above objects in the most general form, the aqueous cationic polymer emulsion developed with the present invention, which enables hydrophobic emulsion to be obtained by direct mixing of the polymeric emulsifier without the use of surface-active additives, mechanical homogenization techniques and solvent, comprises at least one hydrophobic monomer which is ethylenically unsaturated; at least one tertiary amine functional monomer neutralized by carboxylic acid agents or inorganic acid derivatives free of emulsifiers and additives.

A method of preparing an aqueous cationic polymer emulsion for synthesizing an aqueous cationic polymer emulsion developed by the present invention by direct mixing comprises the steps of adding tertiary amine functional monomers neutralized with carboxylic or inorganic acids as ionic monomers, adding the tertiary amine monomer in a ratio of 5-20% by mass to the total monomer content, and mixing.

The structural and characteristic features and all advantages of the invention will be more clearly understood by means of the figures given below and the detailed description written by making references to these figures, and therefore, the evaluation should be made by considering these figures and detailed description.

### Detailed Description of the Invention

In this detailed description, the inventive aqueous cationic polymer emulsion and the preferred embodiments of the method of preparation are described only for a better understanding of the subject matter.

A polymeric emulsifier developed in accordance with the present invention, an exemplary view of which is given in Figure 1, having a hydrophobic coating and preferably a polymeric structure which ensures homogeneous distribution of the entire ionic content on the main polymer chain, preferably compatible with urethane-based synthetic waxes and reactive waxes such as alkyl ketene dimers (AKD) which are sensitive to high temperature, by direct mixing of the polymeric emulsifier without the use of surfactant additives, mechanical homogenization techniques and solvents, preferably free of emulsifiers, preferably obtained by emulsion polymerization, suitable for emulsifying different types of hydrophobic waxes, regardless of their viscosity and proportion in the emulsion, an aqueous cationic polymer emulsion, preferably at least one hydrophobic monomer, preferably ethylenically unsaturated monomer comprising esters of acrylic and methacrylic and at least one hydrophobic monomer, preferably ethylenically unsaturated, which is a combination of styrene; at least one tertiary amine functional monomer, preferably suitable for polymerization, preferably neutralized by carboxylic acid agents, preferably acetic acid, citric acid, stearic acid, itaconic acid, adipic acid, single or double or multiple carboxylic acid functional acids or inorganic acid derivatives, preferably hydrochloric acid, phosphoric acid, sulfuric acid, single or double or multiple valent acids, free of emulsifiers and additives.

In an exemplary embodiment of the aqueous cationic polymer emulsion developed with the present invention, the ethylenically unsaturated hydrophobic monomer and tertiary amine functional monomer neutralized by carboxylic acid agents or inorganic acid derivatives can provide an emulsifier-free cationic emulsion of the polymer with the majority of ionic monomers bound to the parent polymer. Thus, the micelles remain empty and the wax surrounded by the cationic polymer emulsion carries an extra hydrophobic structure. Furthermore, emulsifier-free emulsion is obtained, which can be used as polymeric emulsifier in hydrophobic wax emulsion.

In another preferred embodiment of the invention, said aqueous cationic polymer emulsion comprises a styrene monomer which improves water resistance and film formation. The ratios of styrene monomer and ethylenically unsaturated hydrophobic monomer are important and improve film formation due to the π-π stacking interfacial interaction between styrene monomer, hydrophobicity (water repellency) and phenyl groups. On the other hand, increasing the proportion of styrene in the monomer combination leads to an increase in the glass transition temperature (Tg) of the polymer and decreases the possibility of preparing a stable emulsion without emulsifier in water. For this reason, the combination of styrene monomer and ethylenically unsaturated hydrophobic monomer should be used until the Tg value of the polymer reaches the optimum level and stable emulsion without emulsifier and without decreasing the hydrophobicity of the polymer obtained.

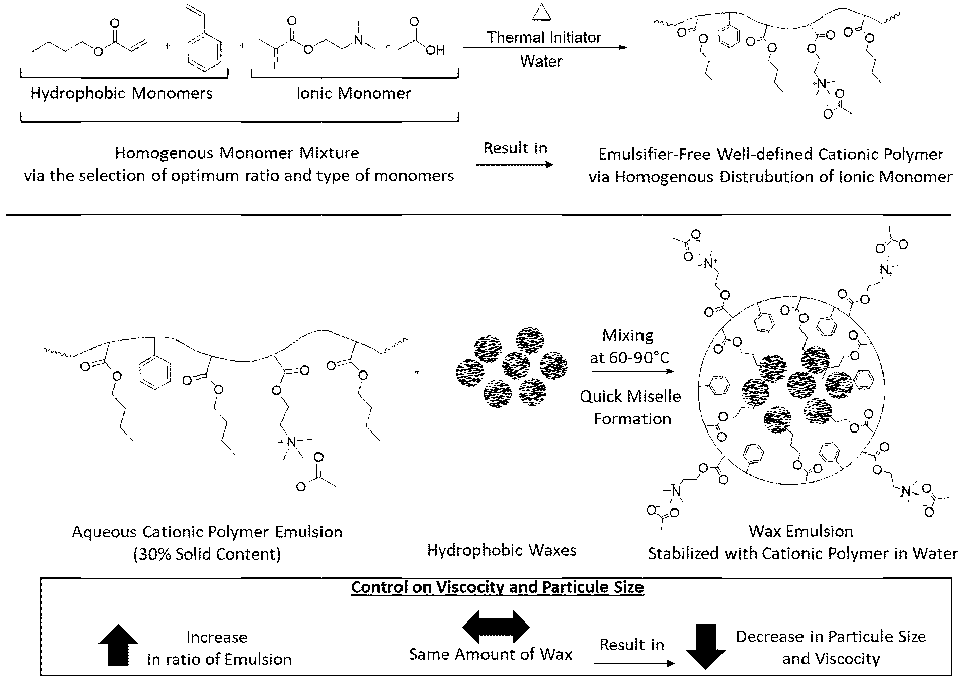

Graph 2: Behavior of polymeric emulsifier mechanism and graphical representation of monomer combinations.

In Garph-2, the one of the optimum combinations of the present invention and the mechanism of polymeric emulsifier behaviors is represented. Regarding the content of hydrophobic monomers used in the example of present embodiment the lower limit of the content of the Butyl Acrylate is 45% by mess or more, preferably 50% by mass, the content of the Styrene is 45% by mess or less, preferably 30% by mess or less, based on the total amount of the monomer combinations. Adhering to these monomer types and ratios, particularly the combination consists of Styrene, Butyl Acrylate, Dimethylaminoethyl Methacrylate (DMAEMA) and Acetic Acid, the obtained aqueous cationic polymer emulsion is surrounding the melted wax particles and emulsify easily. The particle size and viscosity of wax emulsion can be controlled by changing the ratio between the emulsions and waxes. As an interesting finding of present invention is described herein, depending on the type of waxes, the amount of emulsion can be less than waxes and these emulsions are also not suffering from a lack of stability, inconsistent particle size, phase separation, particle coagulation, etc.

In another preferred embodiment of the invention, said aqueous cationic polymer emulsion comprises the reaction product of C1-C12 alcohols and acrylic and methacrylic, such as tertiary butyl acrylate, isodecyl matacrylate, stearyl methacrylate, stearyl acrylate and all associated hydrophobic monomers.

The method of preparing aqueous cationic polymer emulsion developed by the present invention, which enables the synthesis of aqueous cationic polymer emulsion by direct mixing, consists of adding tertiary amine functional monomers neutralized with carboxylic or inorganic acids as ionic monomers for homogeneous binding of ionic monomers and hydrophobic monomers to the same polymer; addition and mixing of tertiary amine monomers at a ratio of 5-20% by mass to the total monomer content to emulsify the polymer and prevent phase separation during polymerization; preferably combining styrene and ethylenically unsaturated monomer and adjusting the ratio of styrene to total monomer content between 5-50% by mass.

When the ratio of Styrene monomer is exceeding these limits, from the viewpoints of high glass transition point and hydrophobicity of polymer, affect negatively the stability of emulsions and the mentioned polymeric emulsifier properties. When it comes to selection of ethylenically unsaturated hydrophobic monomers, long alkyl chain contained monomers C5-C30 alkyl, is increasing the hydrophobicity of organic phase during the polymerization and ionic monomers struggling to reach hydrophobic monomers due to phase separation. Thus, ionic monomers and hydrophobic monomers are not able to come together homogenously in same polymeric structure, leading to lost in their ability to act as polymeric emulsifier for waxes.

In a preferred embodiment of the invention, the method of preparing the aqueous cationic polymer emulsion mentioned in the invention, different types of hydrophobic and water-insoluble, preferably plant/animal based waxes such as carnauba wax, Japanese wax, allspice wax, beeswax, shellac wax, whale oil wax, mineral waxes such as montan wax, ozokerite wax, cerezin wax, paraffinic wax, emulsification of waxes, which are petroleum based waxes such as microcrystalline waxes, alkyl ketene dimer waxes, polytetrafluoroethylene waxes such as sorbitan tristearin and its derivatives, polyethylene based waxes and their copolymers, synthetic waxes such as fatty acid amide/ester/urethane/urea waxes, by directly mixing them into the synthesized aqueous emulsions.

In another preferred embodiment of the invention, the method of preparing said aqueous cationic polymer emulsion comprises a polymerization initiator, preferably a water-soluble reducing agent, preferably a reducing agent, preferably iron (II) salt, persulfate or sodium hydrogen sulfide, ascorbic acid, sodium formaldehyde sulfoxylate, sodium disulfate or sodium dithionite and related derivatives; the step of initiating the polymerization using a polymerization initiator such as hydrogen peroxide, organic peroxide comprising tertiary butyl hydroperoxide, benzoyl peroxide and dicumyl peroxide peroxide and related derivatives.

In another preferred embodiment of the invention, the method of preparing the aqueous cationic polymer emulsion mentioned comprises the step of melting wax having a melting point of less than 100 °C.

In another preferred embodiment of the invention, the method for preparing aqueous cationic polymer emulsions comprises the step of synthesizing a polymeric wax emulsifier by a combination of monomers and synthesizing a urethane-based wax by using the synthesized polymeric wax emulsifier as a solvent in the reaction between oligomeric isocyanate and sorbitan tristearate.

Preferred isocyanate functional agents are selected from mainly commercially available isocyanates such as Hexamethylene diisocyanate, Isophorone diisocyanate, Toluene 2,4-diisocyanate, 1,3-Phenylene diisocyanate, Diphenylmethane 4,4'-diisocyanate, Tolylene-2,4-diisocyanate, Tolylene-2,6-diisocyanate, 1,4-Phenylene diisocyanate, m-Xylylene diisocyanate, trans-1,4-Cyclohexylene diisocyanate, Poly(propylene glycol), tolylene 2,4-diisocyanate terminated, 3,3'-Dimethyl-4,4'-Biphenyl Diisocyanate, 1,4-Diisocyanatobutane, 1,12-Diisocyanatododecane, Tolylene-2,6-diisocyanate, 2-Methyl-m-phenylene diisocyanate, 1,3-Bis(1-isocyanato-1-methylethyl)benzene, 1,3-Bis(isocyanatomethyl) cyclohexane and all their related oligomeric and polymeric derivatives but is not limited.

Considering these handicaps of solvent system, the solution of the present invention based on the synthesis urethane-based wax emulsions in the monomer mixture of their polymeric emulsifier without solvent and surface-active additives is a remarkable accomplishment in this area. Additionally, conventional wax emulsions have to be used with some crosslinker to obtain durable water repellency on applied surfaces. However, the polymeric emulsions of present invention have film forming ability after drying, thus, wax particles are stacking inside this obtained film and doing so, the need for crosslinker is eliminated in this type of applications.

Preferred hydroxy functional hydrophobic wax is used in the synthesis of urethane-based emulsions are selected from the alcohol with alkyl chain C10 to C-unlimited such as Sorbitan Tristearate, Behenyl Alcohol, Stearyl Alcohol, Octacosyl alcohol and all related hydroxy functional unsaturated/saturated long alkyl chain, Straight-chain, branched chain contained structures but is not limited.

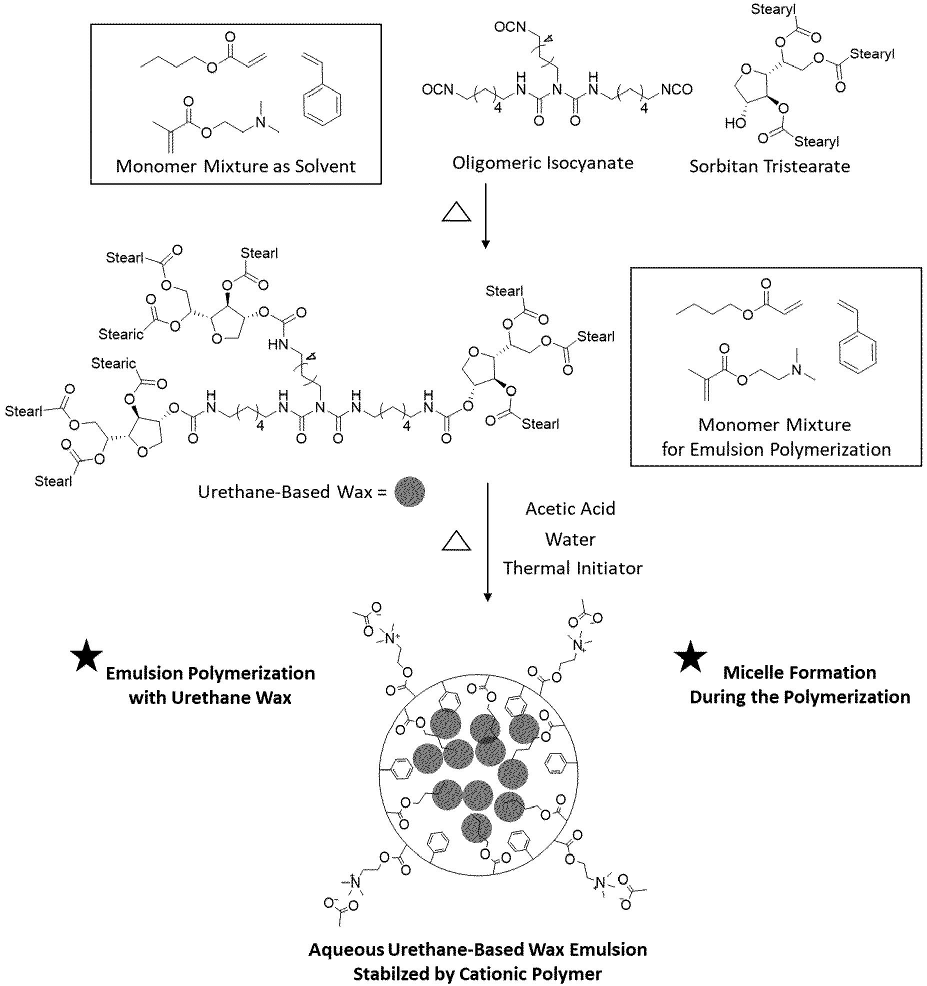

Graph-3: Graphical representation of the synthesis process of aqueous urethane-based wax emulsion.

In another preferred embodiment of the invention, the method for preparing aqueous cationic polymer emulsions comprises the step of synthesizing different types of alkyl ketene dimer (AKD) waxes by direct mixing at 70 °C and varying the ratio of polymeric emulsifier.

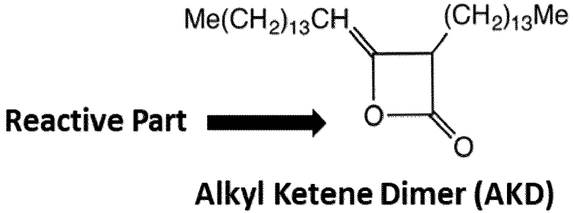

Graph-4: Graphical representation of the synthesis process of alkyl ketene dimer wax emulsion.

Among all other waxes that are emulsified with the polymeric emulsions of the present invention, Alkyl ketene dimers (AKDs) wax derivatives shown in Graph-4, has some critical points to be emphasized. Reactive ketene group in these waxes can undergo the chemical reaction with nucleophile groups such as alcohols, amines and water. Therefore, the stabilized aqueous emulsion of Alkyl ketene dimers (AKDs) waxes has been used internal sizing agent especially in paper industry for the chemical modification of cellulose-based papers to decrease their hydrophilicity. In conventional production of AKDs emulsions are generally achieved with cationic starch or highly cationic polymers and sodium lignin sulfonate and proper homogenizer system is required. Due to the sensitivity of reactive ketene group in these waxes, temperature changes during the production and partial homogenization of wax particles causing the reaction of ketene groups with water and negatively affect the product stability.

In this context, the emulsion described in present invention, totally emulsify the different types of AKD waxes in direct mixing method at 70°C and by changing the ratio of emulsion and AKD waxes, the viscosity, particle size and their sizing properties on paper are controlled, in connection with these results, comparing the others, this method eliminates the disadvantages of conventional production and provide better stability and cost efficiency.

In another preferred embodiment of the invention, the method of preparing the aqueous cationic polymer emulsion mentioned in the invention comprises the step of synthesizing a wax-free cationic polymer emulsion suitable for use in hydrophobic coating by combining styrene, tertiary butyl acrylate (methacrylate) and dimethylaminoethyl matacrylate (DMAEMA) and acetic acid.

The synthetic strategy disclosed in the present invention to produce cationic polymer emulsion and their use for wax emulsification formulations and applications can easily be diversified to limitless derivatives by changing the ratios and types of isocyanates, hydroxy functional long alkyl chain contained alcohols, hydrophobic monomers, the type of neutralization agents and polymerization initiators mentioned above, the solid content of the obtained dispersions. Additionally, the diversification of products can also be achieved by mixing other types of products and all compositions of the present invention can be polymerized using thermal radical initiator or redox polymerization technics.

In another preferred embodiment of the invention, the tertiary amine functional polymerizable monomers is selected from 2-N-Morpholinoethyl methacrylate, 2-N-Morpholinoethyl acrylate, 2-Diisopropylaminoethyl methacrylate, 2-Diisopropylaminoethyl acrylate, N-[3-(N,N-Dimethylamino)propyl] methacrylamide, N-[3-(N,N-Dimethylamino)propyl] acrylamide, N-[2-(N,N-Dimethylamino)ethyl] methacrylamide, N-[2-(N,N-Dimethylamino)ethyl] acrylamide, 2-(N,N-Dimethylamino)ethyl acrylate, 2-(N,N-Dimethylamino)ethyl methacrylate, 2-(N,N-Diethylamino)ethyl methacrylate, 2-(N,N-Diethylamino)ethyl acrylate, 2-(tert-Butylamino)ethyl methacrylate, 2-(tert-Butylamino)ethyl acrylate, 2-(N,N-Dimethylamino)ethyl methacrylate, 2-(N,N-Dimethylamino)ethyl acrylate, and all related monomers, oligomers and polymers but is not limited.

### Example-1

### The Synthesis of Cationic Polymer Emulsion as Polymeric Wax Emulsifier:

In a reaction vessel equipped with a mechanical stirrer, a cooling system, a nitrogen introduction pipe, a thermometer and a dropping funnel, 60g of Styrene, 120g of Butyl Acrylate, 30g of Dimethylaminoethyl Methacrylate (DMAEMA), 20g of Acetic Acid and 500g of water are placed and stirred at room temperature until homogenous mixture obtained. Then, the mixture was heated to 90°C and 2g of 2,2'-Azobis (2-methylpropionamidine) dihydrochloride (V-50, water soluble azo initiator) dissolved in 50g of water was added dropwise through the dropping funnel over a period of 3 hours at 90°C while stirring at 200rpm. Then, the reaction mixture was stirred for extra hour at 90°C. Finally, 1g of tert-butyl hydroperoxide that was a free-radical initiator was added, stirring was further carried out for 2 hours at 90°C to complete the reaction. Slightly blue-white color, semitransparent emulsion with 30% solid content and pH value=4.5, viscosity = 130 (mPa.s at 25°C) obtained.

### Example-2

### The Preparation of Wax Emulsion by Polymeric Wax Emulsifier:

30 g of AKD wax (AKD 1865 supplied from Kemira), 100g of Cationic polymer emulsion prepared in Example-1, 70g of water are mixed directly and heated to 70°C, stirred for 1 hour and cooled down to room temperature. Blue-white milky appearance, 30% solid content, pH=4.6, viscosity = 145 (mPa.s at 25°C).

In another example, following same procedure mentioned above, the amount of AKD wax increased to 75g and 100g of Cationic polymer emulsion prepared in Example-1 were used and Solid content was adjusted to 30% with water. Blue-white milky appearance, 30% solid content, pH=4.6, viscosity = 300 (mPa.s at 25°C) are obtained.

### Example-3

### The Synthesis of Urethane-Based Wax and Preparation of Its Emulsion by Polymeric Wax Emulsifier:

With same reaction system and equipment in Example-1, 60g of Styrene, 120g of Butyl Acrylate, 30g of Dimethylaminoethyl Methacrylate (DMAEMA), 50g of Basonat HI 100 NG (Solvent-free aliphatic polyisocyanate from BASF, NCO = ~5,23 mmol/g) and 250g of Sorbitan tristearate (Span 65 from Croda) were stirred at 90°C about 4 hours until total consumption of isocyanate peaks disappeared in FTIR analysis. Then, 20g of Acetic Acid and 1,1 kg of water are placed and heated to 90°C. After that, 4g of 2,2'-Azobis (2-methylpropionamidine) dihydrochloride (V-50, water soluble azo initiator) dissolved in 100g of water was added dropwise through the dropping funnel over a period of 3 hours at 90°C while stirring at 200rpm. Then, the reaction mixture was stirred for extra hour at 90°C. Finally, 1g of tert-butyl hydroperoxide that was a free-radical initiator was added, stirring was further carried out for 2 hours at 90°C to complete the reaction. Blue-white appearance, 30% solid content and pH value=4.5, viscosity = 200 (mPa.s at 25°C) obtained.

### Example-4

### The Synthesis of Cationic Polymer Emulsion for Hydrophobic Coating:

With same reaction system and equipment in Example-1, 60g of Styrene, 120g of Tert-Butyl Acrylate, 30g of Dimethylaminoethyl Methacrylate (DMAEMA), 20g of Acetic Acid and 500g of water are placed and stirred at room temperature until homogenous mixture obtained. Then, same procedure and initiator was used in Example-1 to prepare cationic polymer emulsion for hydrophobic coating without wax content. Slightly blue-white color, semitransparent emulsion with 30% solid content and pH value=4.5, viscosity = 175 (mPa.s at 25°C) obtained.

Quaternary ammonium salt functional monomers are also in the category of the strong cationic monomers. However, in the combinations of present invention, these Quaternary amine monomers make water phase strongly ionic leading the inevitable phase separation during the polymerization and also obtained emulsions are not suitable as polymeric emulsifier for hydrophobic waxes.

Other possible embodiments of this invention will be apparent to those skilled in the art upon consideration of this finding or from practice of the invention disclosed herein. While certain features of the invention have been illustrated and described herein, many modifications, substitutions, changes the principles, and equivalents will now occur to those of ordinary skill in the art. It is, therefore, to be understood that the appended claims are intended to cover all such modifications and changes as fall within the true spirit of the invention.

The compositions of the present invention and their possible modifications, substitutions and derivatives have clear potential to find applications such as formulation of textile, and paper, packaging and any type of coating application and not intended to be exhaustive or to limit the invention to the precise forms or applications.

Thanks to the aqueous cationic polymer emulsion and preparation method developed with the present invention, hydrophobic emulsion can be obtained without the use of surface-active additives, mechanical homogenization techniques and solvent-based production methods, suitable for use as a polymeric wax emulsifier working with hydrophobic coating and direct hydrophobic wax addition, An aqueous cationic polymer emulsion preparation method for preparing a wax emulsion by direct mixing of an aqueous polymeric emulsifier and an aqueous cationic polymer emulsion preparation method for synthesizing an aqueous cationic polymer emulsion by emulsion polymerization, suitable for use in textile paper, packaging and all types of coating applications, are provided.

## Claims

1. An aqueous cationic polymer emulsion suitable for use as a hydrophobic coating and polymeric emulsifier, enabling hydrophobic emulsion to be obtained by direct mixing of the polymeric emulsifier without the use of surfactant additives and mechanical homogenization techniques and solvents comprising:
- at least one hydrophobic monomer,
- at least one tertiary amine functional monomer,
- **characterized in that** the hydrophobic monomer is ethylenically unsaturated and the tertiary amine functional monomer is neutralized by carboxylic acid agents or inorganic acid derivatives free of emulsifiers and additives.

2. An aqueous cationic polymer emulsion as claimed in claim 1, wherein the polymeric wax emulsifier has a polymeric structure that ensures homogeneous distribution of the entire ionic content on the main polymer chain.

3. An aqueous cationic polymer emulsion as claimed in claim 1, wherein the polymeric wax emulsifier is compatible with urethane-based synthetic waxes and reactive waxes such as alkyl ketene dimers, which are sensitive to high temperature.

4. An aqueous cationic polymer emulsion as claimed in claim 1, wherein the hydrophobic emulsion is an acrylic-based aqueous cationic polymer emulsion without emulsifier, obtained by emulsion polymerization.

5. An aqueous cationic polymer emulsion as claimed in claim 1, wherein the hydrophobic emulsion is suitable for emulsifying different types of hydrophobic waxes, regardless of their viscosity and proportion in the emulsion.

6. An aqueous cationic polymer emulsion as claimed in claim 1, wherein the ethylenically unsaturated hydrophobic monomer is a combination of ethylenically unsaturated monomer and styrene containing esters of acrylic and methacrylic.

7. An aqueous cationic polymer emulsion as claimed in claim 1, wherein the carboxylic acid agents are acetic acid, citric acid, stearic acid, stearic acid, itaconic acid, adipic acid, single or double or multiple carboxyl acid-functionalized acid.

8. An aqueous cationic polymer emulsion as claimed in claim 1, wherein the inorganic acid derivatives are hydrochloric acid, phosphoric acid, sulfuric acid, mono- or divalent or polyvalent acids.

9. An aqueous cationic polymer emulsion as claimed in claim 1, wherein the tertiary amine functional monomer is suitable for polymerization.

10. An aqueous cationic polymer emulsion as claimed in claim 9, wherein the tertiary amine functional polymerizable monomers is selected from 2-N-Morpholinoethyl methacrylate, 2-N-Morpholinoethyl acrylate, 2-Diisopropylaminoethyl methacrylate, 2-Diisopropylaminoethyl acrylate, N-[3-(N,N-Dimethylamino)propyl] methacrylamide, N-[3-(N,N-Dimethylamino)propyl] acrylamide, N-[2-(N,N-Dimethylamino)ethyl] methacrylamide, N-[2-(N,N-Dimethylamino)ethyl] acrylamide, 2-(N,N-Dimethylamino)ethyl acrylate, 2-(N,N-Dimethylamino)ethyl methacrylate, 2-(N,N-Diethylamino)ethyl methacrylate, 2-(N,N-Diethylamino)ethyl acrylate, 2-(tert-Butylamino)ethyl methacrylate, 2-(tert-Butylamino)ethyl acrylate, 2-(N,N-Dimethylamino)ethyl methacrylate, 2-(N,N-Dimethylamino)ethyl acrylate, and all related monomers, oligomers and polymers.

11. An aqueous cationic polymer emulsion as claimed in claim 1, wherein the aqueous cationic polymer emulsion comprises styrene monomer, which improves water resistance and film formation.

12. An aqueous cationic polymer emulsion as claimed in claim 1, wherein the aqueous cationic polymer emulsion comprises the reaction product of C1-C12 alcohols and acrylic and methacrylic, such as tertiary butyl acrylate, isodecyl matacrylate, stearyl methacrylate, stearyl acrylate and all associated hydrophobic monomers.

13. A method of preparing an aqueous cationic polymer emulsion as claimed in any one of the preceding claims wherein the aqueous cationic polymer emulsion is synthesized by direct mixing, the method comprising the steps of:
- adding and mixing the tertiary amine functional monomers neutralized with carboxylic or inorganic acids as ionic monomers for homogeneous binding of ionic monomers and hydrophobic monomers to the same polymer;
- **characterized in that** the tertiary amine monomer is at a ratio of 5-20% by mass to the total monomer content in order to emulsify the polymer and prevent phase separation during polymerization.

14. A method of preparing an aqueous cationic polymer emulsion as claimed in claim 13, comprising the step of combining styrene and ethylenically unsaturated monomer and adjusting the ratio of styrene to total monomer content between 5-50% by mass.

15. A method of preparing an aqueous cationic polymer emulsion as claimed in claim 13, wherein the emulsion is prepared by mixing different types of hydrophobic and water-insoluble, preferably plant/animal based waxes such as carnauba wax, Japanese wax, allspice wax, beeswax, shellac wax, whale oil wax, mineral waxes such as montan wax, ozokerite wax, cerezin wax, paraffinic wax, emulsification of waxes, which are petroleum based waxes such as microcrystalline waxes, alkyl ketene dimer waxes, polytetrafluoroethylene waxes such as sorbitan tristearin and its derivatives, polyethylene based waxes and their copolymers, synthetic waxes such as fatty acid amide/ester/urethane/urea waxes directly into the synthesized aqueous emulsions.

16. A method of preparing an aqueous cationic polymer emulsion according to claim 13, comprising the step of initiating the polymerization using a polymerization initiator such as a reducing agent, preferably water-soluble, preferably iron (II) salt, persulfate or sodium hydrogen sulfite, ascorbic acid, sodium formaldehyde sulfoxylate, sodium disulfate or sodium dithionite and related derivatives; hydrogen peroxide, organic peroxide comprising tertiary butyl hydroperoxide, benzoyl peroxide and dicumyl peroxide peroxide and a reducing agent which are related derivatives thereof.

17. A method of preparing an aqueous cationic polymer emulsion according to claim 13, comprising the step of melting and adding wax wherein the melting point of the wax is less than 100 °C.

18. A method of preparing an aqueous cationic polymer emulsion according to claim 13, comprising the step of synthesizing a polymeric wax emulsifier by a combination of monomers and synthesizing a urethane-based wax by using the synthesized polymeric wax emulsifier as a solvent in a reaction between oligomeric isocyanate and sorbitan tristearate.

19. A method of preparing an aqueous cationic polymer emulsion according to claim 18, wherein the isocyanate functional agents are selected from mainly commercially available isocyanates such as Hexamethylene diisocyanate, Isophorone diisocyanate, Toluene 2,4-diisocyanate, 1,3-Phenylene diisocyanate, Diphenylmethane 4,4'-diisocyanate, Tolylene-2,4-diisocyanate, Tolylene-2,6-diisocyanate, 1,4-Phenylene diisocyanate, m-Xylylene diisocyanate, trans-1,4-Cyclohexylene diisocyanate, Polypropylene glycol), tolylene 2,4-diisocyanate terminated, 3,3'-Dimethyl-4,4'-Biphenyl Diisocyanate, 1,4-Diisocyanatobutane, 1,12-Diisocyanatododecane, Tolylene-2,6-diisocyanate, 2-Methyl-m-phenylene diisocyanate, 1,3-Bis(1-isocyanato-1-methylethyl)benzene, 1,3-Bis(isocyanatomethyl) cyclohexane and all their related oligomeric and polymeric derivatives.

20. A method of preparing an aqueous cationic polymer emulsion according to claim 18, comprising the step of adding hydroxy functional hydrophobic wax which are selected from the alcohol with alkyl chain C10 to C-unlimited such as Sorbitan Tristearate, Behenyl Alcohol, Stearyl Alcohol, Octacosyl alcohol and all related hydroxy functional unsaturated/saturated long alkyl chain, Straight-chain, branched chain contained structures in the synthesis of urethane-based emulsions.

21. A method of preparing an aqueous cationic polymer emulsion according to claim 13, comprising the step of synthesizing different types of alkyl ketene dimer waxes by direct mixing at 70 °C and varying the ratio of polymeric emulsifier.

22. A method of preparing an aqueous cationic polymer emulsion according to claim 13, comprising the step of synthesizing a wax-free cationic polymer emulsion suitable for use in hydrophobic coating by combining styrene, tertiary butyl acrylate and dimethylaminoethyl matacrylate and acetic acid.
